Europäisches Patentamt

European Patent Office

Office européen des brevets

(19)

(11) Numéro de publication : **0 054 453**
**B1**

(12) FASCICULE DE BREVET EUROPÉEN

(45) Date de publication du fascicule du brevet :
04.07.84

(51) Int. Cl.³ : **B 60 C 23/00**, G 01 G 19/07,
B 64 C 25/36, G 01 G 3/14

(21) Numéro de dépôt : 81401790.1

(22) Date de dépôt : 12.11.81

(54) **Dispositif pour la détection du sous-gonflage d'un pneumatique d'un atterrisseur d'aéronef.**

(30) Priorité : 27.11.80 FR 8025169

(43) Date de publication de la demande :
23.06.82 Bulletin 82/25

(45) Mention de la délivrance du brevet :
04.07.84 Bulletin 84/27

(84) Etats contractants désignés :
DE GB IT NL

(56) Documents cités :
EP-A- 0 026 446
EP-A- 0 034 964
FR-A- 1 527 533
FR-A- 2 076 108
FR-A- 2 200 126
FR-A- 2 280 070
US-A- 3 584 503

(73) Titulaire : **Société Nationale Industrielle Aérospatiale**
**Société anonyme dite:**
**37 Bld de Montmorency**
**F-75016 Paris (FR)**

(72) Inventeur : **David, Robert Claude**
**17 bld des Pyrénées**
**F-31170 Tournefeuille (FR)**
Inventeur : **Signorelli, Louis**
**17 bld Maréchal Leclerc**
**F-31000 Toulouse (FR)**
Inventeur : **Geoffroy, Alain Yves Louis Marcel**
**16 rue des Violettes**
**F-31170 Tournefeuille (FR)**

(74) Mandataire : **Bonnetat, Christian et al**
**Cabinet PROPI Conseils 23 rue de Léningrad**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un dispositif pour la détection du sous-gonflage d'un pneumatique d'un atterrisseur d'aéronef. Elle s'applique tout particulièrement aux atterrisseurs constitués d'au moins un boggie comportant un balancier pourvu d'une paire de roues jumelées à chacune de ses extrémités et articulé autour d'un axe transversal médian à un fût reliant ledit balancier à la structure de l'aéronef, les deux roues de chaque paire étant disposées de part et d'autre dudit balancier.

On sait que le sous-gonflage d'un pneumatique d'atterrisseur peut entraîner rapidement sa destruction complète lors du roulage de l'aéronef. De plus, lorsque l'atterrisseur comporte des paires de roues jumelées et que le pneumatique d'une des roues d'une paire est sous-gonflé, le pneumatique de l'autre roue de la paire subit une surcharge qui peut amener également sa destruction, par exemple au décollage ou à l'atterrissage.

Lorsqu'un pneumatique d'aéronef se détruit en roulage, des parties de son enveloppe sont projetées dans le plan de sa jante et sont susceptibles d'endommager gravement la structure de l'aéronef, ainsi que les systèmes voisins de celui-ci. En outre, le roulage sur jante risque de détruire celle-ci, ce qui peut provoquer des incidents de freinage de l'aéronef et des accidents pour celui-ci.

On connaît déjà des dispositifs pour détecter le sous-gonflage d'un pneumatique. Par exemple, dans les brevets français n° 1 527 533, n° 2 076 108, n° 2 200 126 et n° 2 280 070, ainsi que dans le brevet américain n° 3 584 503 on dispose des jauges de contrainte sur les essieux des roues. Il en résulte des modes de réalisation compliqués et spéciaux disposés à l'intérieur des essieux creux des roues. Ainsi, non seulement l'agencement des jauges de contrainte est alors complexe et peu accessible, mais encore nécessite des dispositifs spéciaux devant être logés dans les essieux des roues.

La présente invention permet d'utiliser de simples jauges de contrainte du commerce qui se trouvent facilement accessibles après leur pose sur l'atterrisseur.

A cette fin, selon l'invention, le dispositif pour détecter le sous-gonflage d'un pneumatique d'un atterrisseur d'un aéronef en cours de roulage, ledit atterrisseur étant formé d'au moins un boggie comportant un balancier pourvu d'une paire de roues jumelées à chacune de ses extrémités et articulé autour d'un axe transversal médian à un fût reliant ledit balancier à la structure de l'aéronef, les deux roues de chaque paire étant disposées de part et d'autre dudit balancier, ledit dispositif comprenant un agencement de jauges de contrainte en combinaison avec un système de diagnostic, et un dispositif d'alarme actionné par ledit système de diagnostic lorsqu'il détecte le dégonflement d'au moins un pneumatique (connu du FR-A-2280070), est remarquable en ce que ledit agencement de jauges de contrainte est disposé sur chacune des parties du balancier comprises entre ledit axe médian d'articulation au fût et la paire de roues correspondante et est susceptible de délivrer un signal représentatif de la torsion de ladite partie de balancier autour de son axe longitudinal et en ce que, chacun desdits agencements de jauges de contrainte étant réalisé sous la forme d'un montage en pont de quatre jauges, chaque pont est disposé de façon que ses quatre jauges de contrainte soient deux à deux symétriques par rapport au plan passant par l'axe du fût et par l'axe longitudinal du balancier, chaque pont étant alimenté par sa diagonale transversale au balancier, tandis que le signal de torsion est prélevé dans la diagonale du pont longitudinale par rapport au balancier.

Ainsi, dans la présente invention, on met à profit le fait que l'articulation transversale du balancier sur le fût est rigide longitudinalement pour empêcher toute rotation de l'axe longitudinal dudit balancier. Il en résulte une disposition particulièrement avantageuse des jauges de contrainte, puisque celles-ci sont simplement fixées sur la surface extérieure du balancier. De plus, chacune des jauges de contrainte peut être l'une de celles usuellement disponibles dans le commerce.

Dans la demande de brevet européen n° 26 446, on prévoit bien des dispositifs de détection de contrainte sur le balancier, mais alors ces dispositifs sont constitués par des transducteurs à réductance variable de structure complexe.

La présente invention apporte donc une grande simplification dans l'agencement, l'installation et l'entretien des détecteurs de sous-gonflage de pneumatiques d'atterrisseur d'aéronef.

De préférence, une autre particularité de l'invention réside en ce que ledit système de diagnostic effectue la différence entre les signaux provenant des deux agencements de jauges de contrainte associés au balancier et compare la différence ainsi obtenue à une valeur de référence pour actionner le dispositif d'alarme lorsque ladite différence est supérieure à ladite valeur de référence.

Avantageusement, afin d'obtenir la plus grande sensibilité possible, chaque agencement de jauges de contrainte est disposé aussi proche que possible de la paire de roues correspondantes. Il est avantageux que les agencements de jauges de contrainte soient disposés symétriquement l'un de l'autre par rapport à un plan passant par l'axe du fût et l'axe d'articulation médian.

Afin de ne pas prendre en compte les effets sur les pneumatiques dus au pivotement de l'aéronef le système de diagnostic au roulage inhibe ledit dispositif d'alarme dès que l'orientation du train avant de l'aéronef, orientable pour faire pivoter celui-ci, dépasse un seuil, orientable pour faire pivoter celui-ci, dépasse un seuil déterminé, par exemple choisi à 3° par rapport à l'axe longitudinal de l'aéronef. Cependant, cette inhibition lorsque l'orientation du train avant de l'aéronef est supérieur audit seuil est avantageusement soumise à la condition que la commande de puissance des moteurs de l'aéronef n'est pas en position de puissance maximale.

Par ailleurs, lorsque l'aéronef roule lentement, le sous-gonflage d'un pneumatique ne présente pas de danger particulier. Aussi, le système de diagnostic peut inhiber le dispositif d'alarme lorsque la vitesse de roulage de l'aéronef est inférieure à un seuil déterminé.

Les figures du dessin annexé feront bien comprendre comment l'invention peut être réalisée.

La figure 1 est une vue schématique en élévation latérale, selon la ligne de coupe I-I de la figure 2, d'un boggie d'atterrisseur auquel s'applique l'invention.

La figure 2 est une vue schématique du dessus du boggie de la figure 2.

La figure 3 est une vue en perspective d'un balancier pour le boggie des figures 1 et 2, pourvu des jauges de contrainte.

La figure 4 est une vue schématique en élévation arrière du boggie des figures 1 et 2.

Les figures 5a à 5d illustrent les efforts exercés sur chacun des pneumatiques dudit boggie, dans un cas particulier.

La figure 6 donne le schéma synoptique du dispositif selon l'invention.

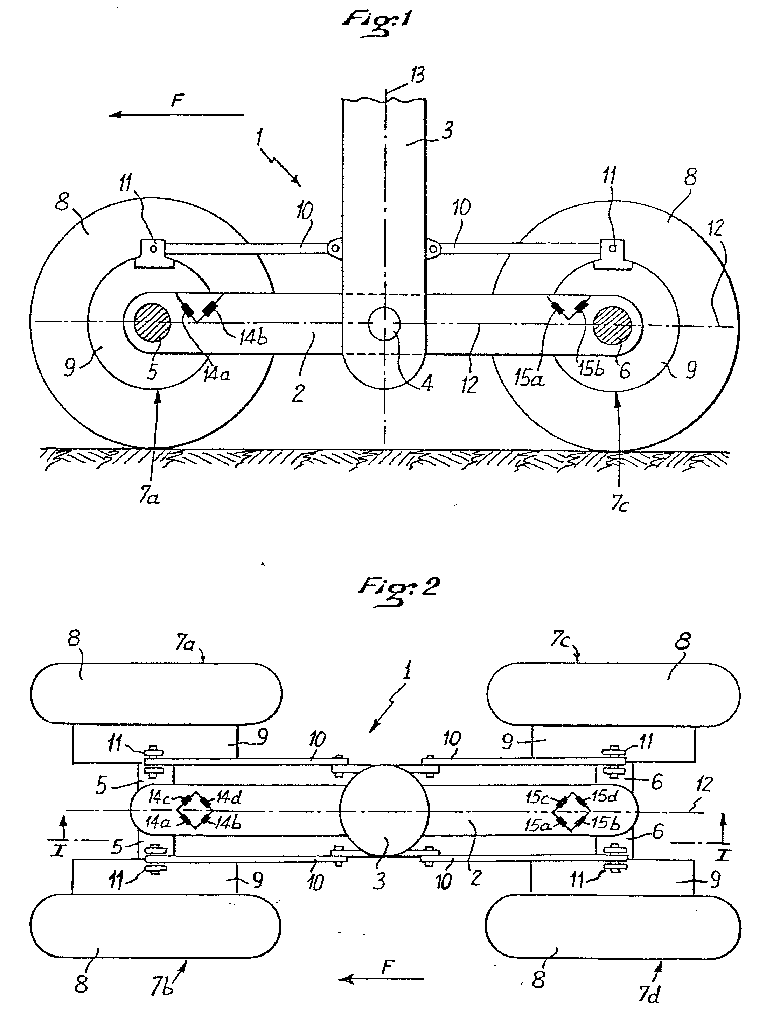

Le boggie 1 d'un atterrisseur d'avion gros porteur, montré par les figures 1 à 4, comporte un longeron ou balancier 2 articulé en son milieu à la partie inférieure d'un fût 3, par l'intermédiaire d'un axe horizontal 4. A sa partie supérieure, le fût 3 est solidaire du fuselage (non représenté) de l'avion.

A ses deux extrémités, le balancier 2 est pourvu d'arbres transversaux 5 ou 6, sur chacun desquels sont montées deux roues jumelées 7a, 7b ou 7c, 7d pourvues de pneumatiques 8. A chaque roue 7a à 7d est associé un frein à disques 9, dont la plaque de couple est empêchée de tourner par une barre de frein 10. A cet effet, chaque barre de frein 10 est articulée à l'une de ses extrémités, au fût 3 et à son autre extrémité, à une chape 11, solidaire de ladite plaque de couple correspondante.

Le balancier présente un axe longitudinal 12, généralement coplanaire, mais orthogonal, aux axes 4, 5 et 6, tandis que le fût 3 comporte un axe vertical 13.

Comme le montrent les figures 1 à 3, à chacune des extrémités avant et arrière du balancier 2, au voisinage des arbres 5 et 6, est monté un pont de jauges de contrainte (transducteurs extensométriques). Le pont avant comporte quatre jauges 14a à 14d, tandis que le pont arrière comporte quatre jauges 15a à 15d.

Les jauges 14a à 14d et 15a à 15d sont en contact mécanique étroit avec le balancier 2, par exemple avec la surface supérieure de celui-ci, et sont disposées de façon que les jauges 14a et 14b et 15a et 15b soient respectivement symétriques de jauges 14c et 14d et 15c et 15d par rapport au plan défini par les axes 12 et 13. De plus, lesdites jauges forment un angle d'environ 45° par rapport à l'axe 12. On élimine ainsi les signaux produits par les efforts de flexion longitudinale et les efforts tranchants (efforts de cisaillement).

Par ailleurs, les ponts 14a à 14d et 15a à 15d sont symétriques l'un de l'autre par rapport au plan passant par les axes 4 et 13, lorsque le balancier 2 est horizontal.

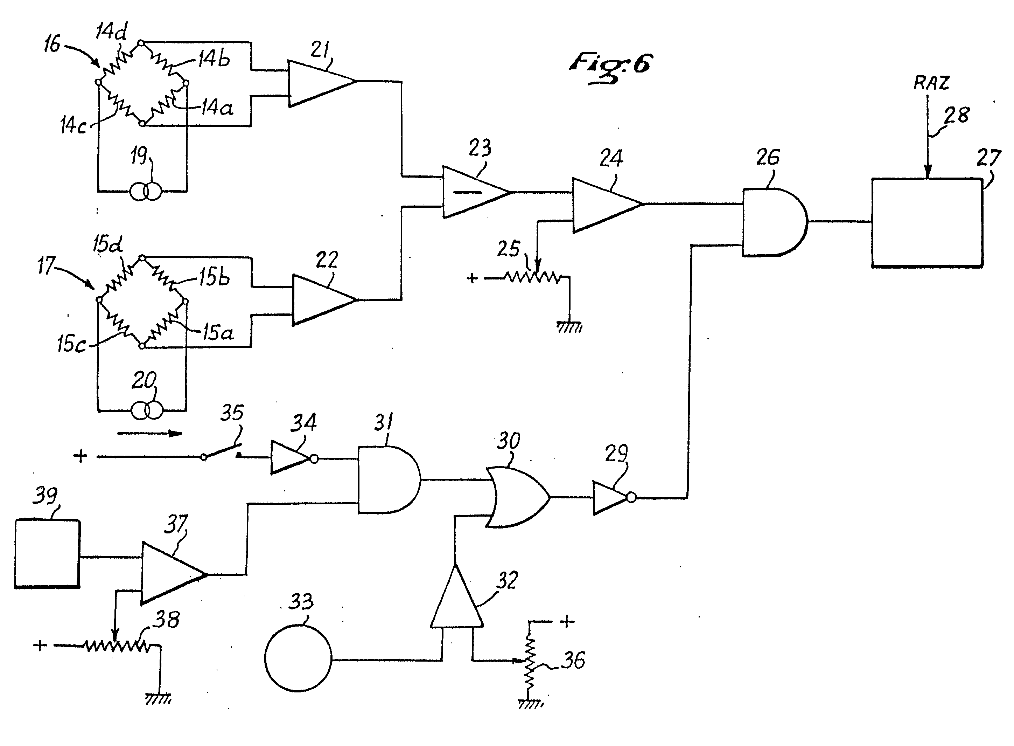

La figure 6 montre que les quatre jauges de contrainte 14a à 14d sont montées pour former un pont 16, alimenté par la diagonale passant par les points communs aux jauges 14a et 14b, d'une part, et aux jauges 14c et 14d d'autre part, le signal étant prélevé aux bornes de la diagonale passant par les points communs aux jauges 14a et 14c d'une part, et aux jauges 14b et 14d, d'autre part. De même, les quatre jauges de contrainte 15a à 15d sont montées pour former un pont 17, alimenté par la diagonale passant par les points communs aux jauges 15a et 15b d'une part, et aux jauges 15c et 15d, d'autre part, le signal étant prélevé aux bornes de la diagonale passant par les points communs aux jauges 15a et 15c d'une part, et aux jauges 15b et 15d, d'autre part.

Lorsque le pneumatique 8 de l'une des roues 7a à 7d du boggie 1 est sous-gonflé par rapport aux pneumatiques des autres roues, il en résulte un effort de torsion (autour de l'axe 12) de la partie avant ou arrière du balancier 2 à laquelle appartient la roue au pneumatique sous-gonflé ; en effet, le balancier 2 est maintenu fixe en rotation longitudinale, au niveau de l'axe 4. La torsion résultante de la partie de balancier intéressée est alors mesurée par le pont de jauges 16 ou 17 correspondant.

Des essais, effectués par la Demanderesse, montrent que le niveau du signal à la sortie des ponts 16 ou 17, lorsque l'avion est à l'arrêt, est une fonction croissante de sous-gonflage d'un pneumatique 8 et, simultanément, de la masse de l'avion. Lorsque l'avion est en roulage, le niveau dudit signal de torsion devient de plus une fonction inverse de la vitesse de roulage.

Cependant, les signaux à la sortie des ponts 16 et 17 prennent en compte, non seulement le sous-gonflage d'un pneumatique 8, mais encore, lorsque l'avion est en roulage, des efforts parasites, tels que :
— efforts latéraux exercés sur l'avion, par exemple par un vent de travers ou un dérapage ;
— efforts dus à des défauts de perpendicularité entre un atterrisseur et la piste d'atterrissage, par exemple en cas de piste bombée ;
— efforts dus au pivotement de l'avion, du fait que les roues des atterrisseurs 1 ne sont pas orientables.

Ainsi, pour pouvoir détecter un sous-gonflage aussi faible que possible et déclencher une alarme de sous-gonflage significative, il est indispensable d'éliminer ces signaux de torsion parasites.

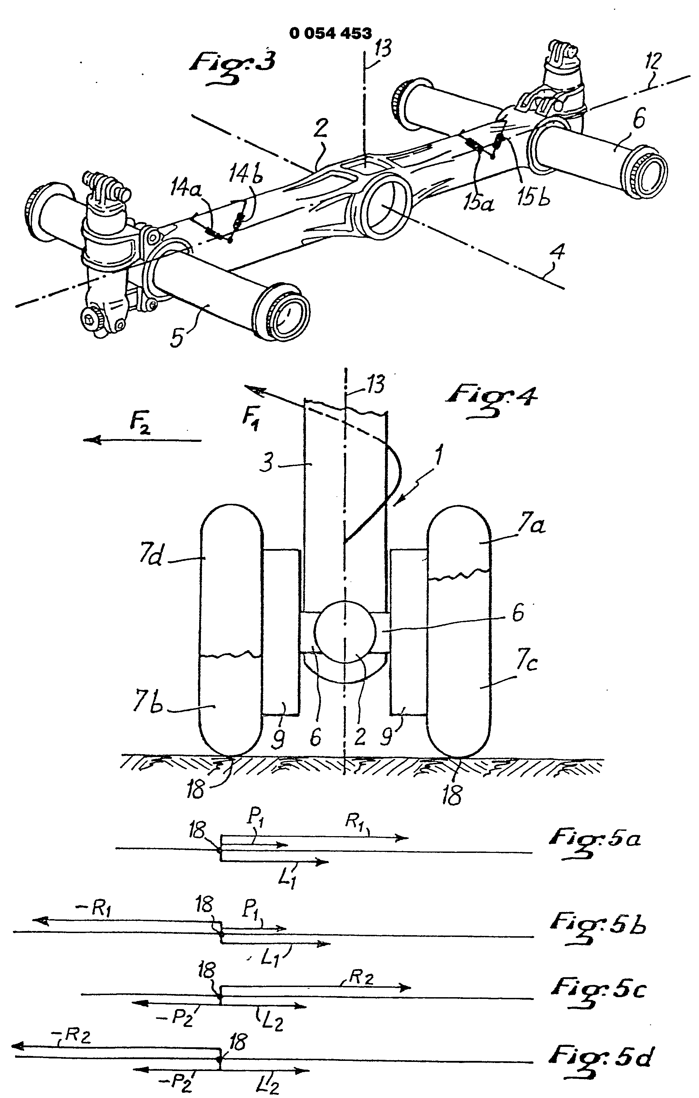

Sur les figures 5a à 5b, on a représenté les efforts latéraux $L_1$ et $L_2$, les efforts $P_1$ et $P_2$ aux défauts de perpendicularité entre l'atterrisseur et la piste de roulage et les efforts $R_1$ et $R_2$ dus au pivotement de l'avion en roulage, au point de contact 18 des roues avec le sol, en supposant que l'avion pivotait selon la

flèche $F_1$ et qu'il était soumis à l'action du vent ou à un dérapage selon la flèche $F_2$ (voir la figure 4).

Si l'on considère le boggie 1 situé à gauche de l'avion, ses roues avant 7a et 7b (voir la figure 5a) subissent les efforts $L_1 + P_1 + R_1$, tandis que ses roues arrière 7c et 7d (voir la figure 5b) subissent les efforts $L_1 + P_1 - R_1$.

Dans ces conditions, pour le boggie 1 situé à droite de l'avion, les roues avant 7a et 7b (voir la figure 5c) subissent les efforts $L_2 - P_2 + R_2$ et les roues arrière 7c et 7d (voir la figure 5d) les efforts $L_2 - P_2 - R_2$.

Les torsions correspondant aux efforts $L_1$ et $L_2$ sont de même signe et peuvent être positives ou négatives. De plus, l'expérience montre que $L_1$ et $L_2$ sont sensiblement égales, et qu'il en est de même de $P_1$ et $P_2$. De sorte que si l'on pose $L = L_1 = L_2$ et $P = P_1 = P_2$ on peut dresser le tableau suivant :

| | Efforts sur roues avant (1) | Efforts sur roues arriè-re (2) | (1)+(2) | (1)-(2) |
|---|---|---|---|---|
| Boggie gauche | $L+P+R_1$ | $L+P-R_1$ | $2L+2P$ | $2R_1$ |
| Boggie droit | $L-P+R_2$ | $L-P-R_2$ | $2L-2P$ | $2R_2$ |
| Différence Boggie gauche-Boggie droit | | | $4P$ | $2R_1-2R_2$ |

La valeur du signal parasite fourni par les jauges de contrainte 14a à 14d et 15a à 15d et dû au pivotement de l'avion (efforts $R_1$ et $R_2$) pouvant être élevée au cours du roulage sur des voies de dégagement, il pourrait sembler intéressant d'éliminer ce signal parasite en effectuant la somme, par boggie, des efforts sur les roues avant et arrière, puis en effectuant la différence de ces sommes, puisqu'alors le signal parasite restant est $4P$. La valeur de la perpendicularité des atterrisseurs avec la piste étant assez bien définie, il serait possible de minimiser l'effet parasite correspondant en faisant intervenir le signal maximal $P_M$ de perpendicularité (c'est-à-dire pour la masse maximale de l'avion) et en retranchant $2P_M$ à la somme des effets (1) + (2) sur le boggie gauche et en ajoutant $2P_M$ à la somme des efforts (1) + (2) sur le boggie droit. Le seuil de détection du système serait alors réglé à une valeur supérieure à $4(P_m - P_M)$, $P_m$ correspondant à une valeur moyenne du signal P.

Cependant, une telle combinaison de signaux apporterait un seuil de détection assez élevé pour un résultat peu intéressant. En effet, il est parfaitement possible de détecter un sous-gonflage avant décollage au cours d'un roulage en ligne droite, par exemple au cours de l'alignement avant décollage. Par ailleurs, un sous-gonflage n'est pas dangereux au cours des déplacements d'un avion à basse vitesse.

C'est pourquoi, selon la présente invention, c'est la différence (1) − (2) entre les signaux issus des jauges avant et les signaux issus des jauges arrière qui est effectuée pour chaque balancier. Le signal parasite restant dans cette combinaison est respectivement $2R_1$ ou $2R_2$, dans la mesure où l'avion est en cours de pivotement. S'il roule en ligne droite, $R_1 = R_2 = 0$ et aucun signal parasite ne subsiste, hormis le bruit de fond commun à tous les montages électroniques.

Le dispositif selon l'invention est donc inhibé lorsque l'avion pivote et l'on considère qu'il y a pivotement lorsque le train avant de l'avion (roulette de nez) est tourné de plus de trois degrés. Cette inhibition est supprimée si la commande de la puissance des moteurs est activée à fond dans le sens de la puissance maximale.

Le dispositif selon l'invention est également inhibé si la vitesse avion est inférieure à 5 mètres/seconde.

On voit sur la figure 6 un mode de réalisation du dispositif de détection selon l'invention correspondant à un côté d'un train d'atterrissage principal.

Les ponts de jauges 16 (placé sur la partie avant du balancier 2) et 17 (placé sur la partie arrière du balancier 2) sont respectivement alimentés par deux générateurs de courant continu 19 et 20. Les sorties desdits ponts 16 et 17 sont respectivement connectées aux entrées de deux amplificateurs 21 et 22 comportant chacun un circuit à retard de 0,5 seconde destinés à éliminer les signaux parasites dus aux vibrations du train, aux irrégularités de la piste etc...

Les sorties des amplificateurs 21 et 22 sont reliées aux deux entrées d'un amplificateur soustracteur 23 effectuant la différence des signaux amplifiés issus des ponts 16 et 17. La sortie du soustracteur 23 est reliée à un amplificateur comparateur 24, qui délivre un signal à une entrée d'une porte 26, de type ET, lorsque le signal issu du soustracteur 23 dépasse un seuil déterminé par le circuit potentiométrique 25. Ce circuit est destiné à éliminer le bruit de fond des éléments précédents et à déterminer un seuil certain de détection de sous-gonflage.

4

La sortie de la porte ET 26 est reliée à un élément de signalisation ou d'alarme 27 comportant un circuit d'auto-maintien d'alarme après déclenchement de celle-ci. Le circuit d'auto-maintien peut être remis à l'état de repos, à l'aide d'un circuit de remise à zéro 28 commandé manuellement. L'élément de signalisation 27 est de préférence un voyant lumineux, mais peut être remplacé ou complété par une sonnerie, un gong, ou tout autre avertisseur. Il est activé lorsqu'un signal apparaît à la sortie de la porte ET 26.

Sur la deuxième entrée de celle-ci est connecté un circuit d'inhibition comportant un inverseur logique 29 dont la sortie est reliée à ladite deuxième entrée de la porte 26 et dont l'entrée est connectée à la sortie d'une porte 30 de type OU à deux entrées.

Une première entrée de la porte 30 reçoit les signaux issus d'un amplificateur comparateur 32. Celui-ci délivre un signal lorsque la tension fournie par une génératrice tachymétrique 33 du train avant de l'avion est inférieure à un seuil déterminé par un montage potentiométrique 36, ledit seuil correspondant par exemple à une vitesse de l'avion de 5 mètres/seconde.

Le signal issu du comparateur 32 est alors inversé par 29 et inhibe donc la porte 26 lorsque la vitesse de l'avion est inférieure à 5 m/s.

La seconde entrée de la porte OU 30 est reliée à la sortie d'une porte ET 31 comportant deux entrées. Une première entrée est reliée à la sortie d'un inverseur logique 34 dont l'entrée est reliée à une source positive par l'intermédiaire d'un interrupteur 35 activé lorsque la commande de puissance des moteurs de l'avion est placée dans la position correspondant à la puissance maximale desdits moteurs. Dans ce cas, la porte ET 31 est donc inhibée et délivre un signal zéro qui fournit un signal 1 à l'entrée de la porte ET 24 (du fait de l'inverseur 29).

La seconde entrée de la porte ET 31 est reliée à la sortie d'un amplificateur comparateur 37 qui délivre un signal lorsque la tension fournie par un circuit 39 de recopie d'orientation du train avant de l'avion est supérieure à un seuil déterminé par un montage potentiométrique 38 et correspondant à un angle de 3° par rapport à la position alignée du train avant pour le roulage en ligne droite.

L'amplificateur comparateur 37 délivre donc un signal lorsque ladite orientation est supérieure à un angle de 3° à gauche ou à droite, et si le contacteur 35 est ouvert, la porte ET 31 délivre un signal 1 qui donne un signal zéro à l'entrée de la porte ET 26 (du fait de l'inverseur 29) qui se trouve inhibée.

Les conditions d'inhibition du montage de détection selon l'invention sont ainsi réalisées.

Si aucune inhibition n'est produite, le montage déclenche l'alarme dès qu'une différence apparaît entre les signaux fournis par les ponts 16 et 17, si cette différence a une durée supérieure à 0,5 seconde et si elle dépasse un seuil déterminé par 25 et correspondant par exemple à une différence de gonflage entre les deux pneumatiques d'une paire de roues jumelées de 30 %.

## Revendications

1. Dispositif pour détecter le sous-gonflage d'un pneumatique (8) d'un atterrisseur d'un aéronef en cours de roulage, ledit atterrisseur étant formé d'au moins un boggie (1) comportant un balancier (2) pourvu d'une paire de roues jumelées (7a,7b-7c,7d) à chacune de ses extrémités et articulé autour d'un axe (4) médian transversal à un fût (3) reliant ledit balancier (2) à la structure de l'aéronef, les deux roues de chaque paire étant disposées de part et d'autre dudit balancier, ledit dispositif comprenant un agencement de jauges de contrainte (14a à 14d et 15a à 15d) en combinaison avec un système de diagnostic et un dispositif d'alarme (27) actionné par ledit système de diagnostic lorsqu'il détecte le dégonflement d'au moins un pneumatique (8), caractérisé en ce que ledit agencement de jauges de contrainte est disposé sur chacune des parties du balancier (2) comprises entre ledit axe médian (4) d'articulation au fût et la paire de roues correspondante (7a,7b-7c,7d), et est susceptible de délivrer un signal représentatif de la torsion de ladite partie de balancier autour de son axe longitudinal (12) et en ce que, chacun desdits agencements de jauges de contrainte étant réalisé sous la forme d'un montage en pont de quatre jauges, chaque pont (14a à 14d et 15a à 15d) est disposé de façon que ses quatre jauges de contrainte soient deux à deux symétriques par rapport au plan passant par l'axe (13) du fût (3) et par l'axe longitudinal (12) du balancier (2), chaque pont étant alimenté par sa diagonale transversale au balancier (2), tandis que le signal de torsion est prélevé dans la diagonale du pont longitudinale par rapport au balancier (2).

2. Dispositif selon la revendication 1, caractérisé en ce que ledit système de diagnostic effectue la différence entre les signaux provenant des deux agencements de jauges de contrainte (14a à 14d et 15a à 15d) associés au balancier (2) et compare la différence ainsi obtenue à une valeur de référence pour actionner le dispositif d'alarme (27) lorsque ladite différence est supérieure à ladite valeur de référence.

3. Dispositif selon l'une des revendications 1 ou 2 caractérisé en ce que chaque agencement de jauges de contrainte (14a à 14d et 15a à 15d) est disposé aussi proche que possible de la paire de roues correspondantes (7a,7b-7c,7d).

4. Dispositif selon l'une des revendications 1 à 3 caractérisé en ce que lesdits agencements de jauges de contrainte (14a à 14d et 15a à 15d) sont disposés symétriquement l'un de l'autre par rapport à un plan passant par l'axe (13) du fût (3) et l'axe d'articulation médian (4).

5. Dispositif selon l'une des revendications 2 à 4, caractérisé en ce que le système de diagnostic n'actionne le dispositif d'alarme (27) que si, de plus, ladite différence se maintient au-dessus de la valeur de référence pendant une durée supérieure à une durée prédéterminée.

6. Dispositif selon l'une des revendications 1 à 5, caractérisé en ce que le système de diagnostic inhibe ledit dispositif d'alarme (27) dès que l'orientation du train avant de l'aéronef, orientable pour faire pivoter celui-ci, dépasse un seuil déterminé.

7. Dispositif selon la revendication 6, caractérisé en ce que l'inhibition intervenant lorsque l'orientation du train avant de l'aéronef est supérieure audit seuil est soumise à la condition que la commande de puissance des moteurs de l'aéronef n'est pas en position de puissance maximale.

8. Dispositif selon l'une des revendications 1 à 7, caractérisé en ce que le système de diagnostic inhibe le dispositif d'alarme (27) lorsque la vitesse de roulage de l'aéronef est inférieure à un seuil déterminé.

**Claims**

1. Device for detecting under-inflation of a tyre 8 of a landing gear of a taxiing aircraft, said landing gear being formed by at least one bogie 1 comprising a beam 2 provided with a pair of twin wheels 7a,7b-7c,7d at each of its ends and articulated about a median spindle 4 transverse to a shaft 3 connecting said beam 2 to the structure of the aircraft, the two wheels of each pair being disposed on either side of said beam, said device comprising an arrangement of strain gauges 14a to 14d and 15a to 15d in combination with a diagnosis system and an alarm device 27 actuated by said diagnosis system when it detects the deflation of least one tyre 8, characterized in that said arrangement of strain gauges is disposed on each of the parts of the beam 2 comprised between said median spindle 4 for articulation on the shaft and the corresponding pair of wheels 7-,7b-7c,7d and is capable of delivering a signal representative of the torsion of said beam part about its longitudinal axis 12 and in that, each of said arrangements of strain being made in the form of a bridge assembly of four gauges, each bridge 14a to 14d and 15a to 15d is disposed so that its four strain gauges are symmetrically in two's with respect to the plane passing through the axis 13 of the shaft 3 and through the longitudinal axis 12 of the beam 2, each bridge being supplied by its diagonal transverse to the beam 2, whilst the torsion signal is taken from the diagonal of the bridge, which is longitudinal with respect to the beam 2.

2. Device according to Claim 1, characterized in that said diagnosis system effects the difference between the signals coming from the two arrangements of strain gauges 14a to 14d and 15a to 15d associated with the beam 2 and compares the difference thus obtained with a reference value to actuate the alarm device 27 when said difference is greater than said reference value.

3. Device according to one of Claims 1 or 2, characterized in that each arrangement of strain gauges 14a to 14d and 15a to 14d is disposed as closely as possible to the pair of corresponding wheels 7a,7b-7c, 7d.

4. Device according to one of Claims 1 to 3, characterized in that said arrangements of strain gauges 14a to 14d and 15a to 15d are disposed symmetrically one to the other with respect to a plane passing through the axis 13 of the shaft 3 and the median pivot spindle 4.

5. Device according to one of Claims 2 to 4, characterized in that the diagnosis in that the diagnosis system actuates the alarm device 27 only if, in addition, said difference is maintained above the reference value for a duration greater than a predetermined duration.

6. Device according to one of Claims 1 to 5, characterized in that the diagnosis system inhibits said alarm device 27 as soon as the orientation of the front undercarriage of the aircraft, orientable to pivot the latter, exceeds a determined threshold.

7. Device according to Claim 6, characterized in that the inhibition occuring when the orientation of the front undercarriage of the aircraft is greater than said threshold is subject to the condition that the control of power of the engines of the aircraft is not in position of maximum power.

8. Device according to one of Claims 1 to 7, characterized in that the diagnosis system inhibits the alarm device 27 when the taxiing speed of the aircraft is less than a determined threshold.

**Ansprüche**

1. Vorrichtung zum Erfassen eines zu niedrigen Drucks in einem Reifen (8) eines rollenden Flugzeugfahrgestells, das aus zumindest einem Untergestell (1) gebildet ist, das eine Schwinge (2) besitzt, die mit einem Paar Zwillingsrädern (7a,7d-7c,7d) an jedem ihrer Enden versehen ist und um eine Mittelachse (4) angelenkt ist, die quer zu einem Schaft (3) liegt, der die Schwinge (2) mit dem Aufbau des Flugzeuges verbindet, wobei die beiden Räder jedes Paares beiderseits der Schwinge angeordnet sind und wobei die Vorrichtung eine Anordnung von Dehnungsmeßstreifen (14a bis 14d und 15a bis 15d) in Kombination mit einem diagnostischen System sowie eine Alarmeinrichtung (27) aufweist, die vom diagnostischen System in Betrieb gesetzt wird, wenn es einen zu niedrigen Druck in zumindest einem der reifen (8) ermittelt, dadurch gekennzeichnet, daß die Anordnung der Dehnungsmeßstreifen auf jeder der Teile der Schwinge (2) untergebracht, die zwischen der Mittelgelenkachse (4) am Schaft und dem entsprechenden Radpaar (7a,7b-7c,7d) liegt und befähigt ist, ein Signal abzugeben, das der Verrehung des Teils der Schwinge um ihre Längsachse (12) entspricht, und das jede der Anordnungen der Dehnungsmeßstreifen ausgeführt ist in Form einer Brückenschaltung, wobei jede Brücke (14a bis 14d und 15a bis 15d) so ausgelegt ist, daß ihre vier Dehnungsmeßstreifen paarweise symmetrisch gegenüber der Ebene liegen, die durch die Achse (13) des Schaftes (3) und durch die Längsachse (12) der Schwinge (2) verläuft, und wobei jede Brücke von ihrer Quediagonalen an der Schwinge (2) gespeist wird, wogegen das Verdrehungssignal in der Längs-diagonale der Brücke, bezogen auf die Schwinge (2), abgegriffen wird.

2. Vorrichtung nach Anspruch 1, dadurch gekennzeichnet, daß das diagnostische System die Differenz zwischen den Signalen erarbeitet, die von den beiden der Schwinge (2) zugeordneten Anordnungen der Dehnungsmeßstreifen (14a bis 14d und 15a bis 15d) stammen, und die so erhaltene Differenz mit einem Bezugswert vergleicht, um die Alarmeinrichtung (27) dann in Betrieb zu setzen, wenn die Differenz den Bezugswert übersteigt.

3. Vorrichtung nach einem der Ansprüche 1 oder 2, dadurch gekennzeichnet, daß jede Anordnung der Dehnungsmeßstreifen (14a bis 14d und 15a bis 15d) so nahe wie möglich am Paar der entsprechenden Räder (7a,7b-7c,7d) eingesetzt ist.

4. Vorrichtung nach einem der Ansprüche 1 bis 3, dadurch gekennzeichnet, daß die Anordnung der Dehnungsmeßstreifen (14a bis 14d und 15a bis 15d) bezogen auf eine durch die Achse (13) des Schaftes (3) und die Mittelgelenkachse (4) gehende Ebene beiderseits symmetrisch angeordnet sind.

5. Vorrichtung nach einem der Ansprüche 2 bis 4, dadurch gekennzeichnet, daß das diagnostische System die Alarmeinrichtung (27) nur dann in Betrieb sezt, wenn sich darüber hinaus während einer eine vorbestimmte Dauer übersteigenden Zeitspanne die Differenz über dem Bezugswert hält.

6. Vorrichtung nach einem der Ansprüche 1 bis 5, dadurch gekennzeichnet, daß das diagnostische System die Alarmeinrichtung (27) hemmt, sobald die Orientierung des vorderen Fahrwerks des Flugzeuges, das zum Schwenken desselben ausrichtbar ist, einen bestimmten Schwellenwert übersteigt.

7. Vorrichtung nach Anspruch 6, dadurch gekennzeichnet, daß die Hemmung, die einsetzt, wenn die orientierung des vorderen Fahrwerks des Flugzeuges über dem Schwellenwert liegt, der Bedingung unterworfen wird, daß die Leistungssteuerung der Motoren des Flugzeuges nicht in der Stellung maximaler Leistung ist.

8. Vorrichtung nach einem der Ansprüche 1 bis 7, dadurch gekennzeichnet, daß das diagnostische System die Alarmeinrichtung (27) hemmt, wenn die Rollgeschwindigkeit des Flugzeuges unter einem bestimmten Schwellenwert liegt.

*Fig:1*

*Fig:2*

0 054 453

Fig.3

Fig.4

Fig.5a

Fig.5b

Fig.5c

Fig.5d

Fig.6

0 054 453